Europäisches Patentamt

European Patent Office

Office européen des brevets

(11) Publication number: **0 491 093 A1**

## EUROPEAN PATENT APPLICATION

(21) Application number: **90313423.7**

(22) Date of filing: **11.12.90**

(51) Int. Cl.⁵: **B29C 47/06**, B29C 47/22, B29C 47/04

Amended claims in accordance with Rule 86 (2) EPC.

(43) Date of publication of application:
**24.06.92 Bulletin 92/26**

(84) Designated Contracting States:
**AT BE CH DE DK ES FR GB GR IT LI LU NL SE**

(71) Applicant: **HOOVER UNIVERSAL INC.**
**49200 Halyard Drive**
**Plymouth, Michigan 48170(US)**

(72) Inventor: **Hirschberger, Michael**
**3756 Sylvanwood Drive**
**Sylvania, Ohio 43560(US)**

(74) Representative: **Williams, Trevor John et al**
**J.A. KEMP & CO. 14 South Square Gray's Inn**
**London WC1R 5LX(GB)**

(54) **Die head for multiple resin tubular plastic body.**

(57) A die head (10) particularly useful for intermittently producing multiple layer parisons having a moveable mandrel (56) for parison programming and a flow passage in the tooling which has a reduce resin volume and eliminates moving surfaces at the merger of the resin layers. This enables the flow disturbances formed at the resin merger point at the beginning of each resin shot to be placed in the mold flash or trim rather than in the finished article. The point of resin layer merger is upstream from the mandrel (56) so that layer merger occurs adjacent stationary surfaces avoiding possible distortion of layer structure as they merge. A translucent resin can be inserted into the parison to form a longitudinal view stripe in the parison with the view stripe resin being inserted downstream of the layer merger point and upstream of the moving mandrel so that the view stripe is inserted at a location having stationary walls to prevent smearing and distortion of the view stripe caused by moving walls.

## BACKGROUND AND SUMMARY OF THE INVENTION

This invention relates to multiple layer die heads and more particularly to the configuration of the mandrel and the die in intermittent extrusion blow molding for eliminating or minimizing flow disturbance marks and distorted layer structure in the final product.

In multiple layer die heads, molten resins are directed through flow channels to form concentric cylindrical resin flows for each layer. These resin flows are merged together to form a single tubular resin body of concentric layers. The resin layers can be merged in one of several ways to form the resin body. In one type of die head, all of the resin layers will merge together at one location. In another type of die head, two layers will merge together and then subsequent layers will be added one at a time as the resin flows through the die head. In yet another type of die head, the flow of a first resin is divided into two separate concentric flow streams and additional resin layers are inserted in between the streams of the first resin.

During intermittent extrusion, resin flow through the die head is stopped while resin accumulators fill with resin. The resin flow is begun again as pistons force the resin from the accumulators into and through the die head. In multiple layer extrusion, the intermittent flow of resin can cause disturbance marks in the final product. The disturbances are formed at the location within the die head where the layers merge together. One cause of the disturbances is variations in the accumulator fill pressure which causes some interflow between layers at the point of merger. Although accumulator pressures ideally are equal to one another, some variation in pressures will be present. Another cause of the disturbances is the timing of the start and stop of the accumulator piston travel for each shot of resin. Again, while it is ideal for the pistons to all start and stop together with the acceleration and deceleration of the pistons occurring in unison, perfection is not attained.

In typical coextrusion die heads for continuous extrusion blow molding, the volume of resin in the die head between the layer merger point and the parison outlet orifice is relatively large compared to the volume of each container and the attached front trim or flash. If the die head and tooling are used in an intermittent blow molding process, the resin at the layer merger point at the beginning of each shot, where the disturbances occur, ultimately becomes a part of the finished container. The disturbance will often result in a visible or structural defect in the finished container.

One way to avoid placing the disturbance in the finished container is to minimize the resin volume between the layer merger point and the outlet orifice as disclosed in U.S. Patent NO. 4,149,839 issued to Iwawaki et al, Figure 9. This results in placement of the disturbance in the front trim or flash formed during molding and later removed from the finished product.

In many die heads, the mandrel is moved axially to change the thickness of the outlet orifice to vary the wall thickness of the extruded tubular parison. The parison wall thickness is varied to produce a programmed parison which considers the various blow-up ratios at different parts of the mold to produce a finished container having relatively uniform wall thickness. In order for axial movement of the mandrel to effect the wall thickness, it is necessary for the mandrel and the opposing die surface to be inclined relative to the longitudinal axis of the die head. Axial movement of the mandrel then causes the inclined mandrel surface to move toward or away from the die surface changing the parison wall thickness.

Economic considerations dictate that the volume of resin in the flash portion of each shot be kept to a minimum. In order to reduce the resin volume in the die head beyond the layer merger point to place the disturbance in the mold flash, the layer merger point is moved as close as possible to the outlet orifice. In the referenced patent, however, movement of the layer merger close to the outlet results in the merger of resin layers taking place adjacent to the moving mandrel surface. During parison programming, the moving mandrel at the layer merger can distort the layer structure.

At the point where two or more resin layers merge, it is necessary for the resins to flow together with a relative velocity ratio within a specific range. The proper velocity ratio is dependent primarily on the viscosities of the two resins. If the viscosities are approximately equal, then the desired velocities should also be equal resulting in a velocity ratio of one to one or in a tolerance range close to one to one. If the velocity ratio varies from the proper range, a distortion of the layer structure may arise such as a variation in the layer thickness or splitting of the layers. This phonomenon is known as interfacial instability. If different color resins are used, color mixing can occur due to the moving mandrel at the merger point. The mandrel movement changes the cross-sectional area of the resin passage, which changes the resin velocities, affecting the velocity ratios to cause the distortion.

In containers with a view stripe, the multiple layer tubular resin body is first formed and then split to insert a clear or translucent resin to form the view stripe. It is necessary to insert the view stripe resin into the tubular body at a location where there are no moving surfaces to affect the resin flow. Mandrel movement at the view stripe insertion point can smear the view stripe causing distortion in the width of the stripe or other irregularities.

It is an object of the present invention, therefore, to provide a die head for producing a multiple layer programmed parison in which the resin volume between the location of layer merger and the outlet orifice is minimized to enable the disturbance formed at the layer merger point at the beginning of each shot to be located in the mold flash and to do so without a moving mandrel surface at the layer merger point.

It is a further object of the invention to provide a die head meeting the above object and also forming a view stripe in the parison from resin inserted into the melt flow stream after layer merger but not adjacent the moving mandrel surface.

The die head of the present invention forms a tubular resin passage below the layer merger point which has a substantially axial first portion and a second portion surrounding the mandrel which is either diverging or diverging and then converging to the die head outlet orifice. This flow passage shape reduces the volume from typical programmed parison die heads which first form a converging passage, then an axial passage and finally a diverging or converging passage to the outlet orifice.

By reducing the resin volume in the die head tooling, the disturbance formed at the beginning of each shot can be positioned in the mold flash. The axially flowing first portion of the passage is formed by two stationary surfaces. Only the lower portion of the passage, forming the diverging or converging passage, has a moving mandrel surface for programming the parison. This enables the layers to merge at a point with no moving surfaces to avoid the distorted layer structure which can result from merging the layers adjacent the moving mandrel.

The die head of the present invention includes an axially extending mandrel sleeve through which extends a movable pin. The mandrel is attached to the pin at the lower end of the sleeve and is axially movable for programming of the parison. At the end of the die head, an annular outlet orifice is formed between the mandrel and the die through which the resin is extruded forming the tubular parison. By axially moving the pin, the mandrel is raised and lowered which changes the clearance between the mandrel and die to vary the wall thickness of the parison.

The upper portion of the mandrel is frustoconical in shape while the top of the mandrel includes a recessed portion into which the bottom end of the mandrel sleeve is inserted. This enables the inclined conical surface of the mandrel to join with the axial surface of the mandrel sleeve. As the mandrel is moved axially, the circular intersection of the mandrel surface with the sleeve moves axially along the outer surface of the sleeve. The sleeve thus remains stationary with only the mandrel moving. This eliminates any movement of axially extending surfaces within the die head at the formation of a multi-layer tubular body. The only moving surface is the mandrel surface which is preferably limited in size to the minimum surface necessary for the final formation of the parison.

In a die head equipped for forming a parison with a view stripe, the view stripe material can be inserted into the oqaque resin flow at a point above the mandrel so that again, there are no moving surfaces at the point where resins are being merged together.

Additional benefits and advantages of the present invention will become apparent to those skilled in the art to which this invention relates from the subsequent description of the preferred embodiments and the appended claims, taken in conjunction with the accompanying drawings.

BRIEF DESCRIPTION OF THE DRAWINGS

Figure 1 is a sectional view of the die head of the present invention.

Figure 2 is a sectional view of an optional inlet for a translucent resin for a view stripe.

Figure 3 is a perspective view of a finished container illustrating a view stripe.

Figure 4 is a sectional view of the container as seen from substantially the line 4-4 of Figure 3 further illustrating the view stripe.

Figure 5 is a sectional view of a prior art die head having a reduced volume below the resin merger point.

Figure 6 is a sectional view of the die head lower end showing a modified form of the invention.

DETAILED DESCRIPTION OF THE PREFERRED EMBODIMENT

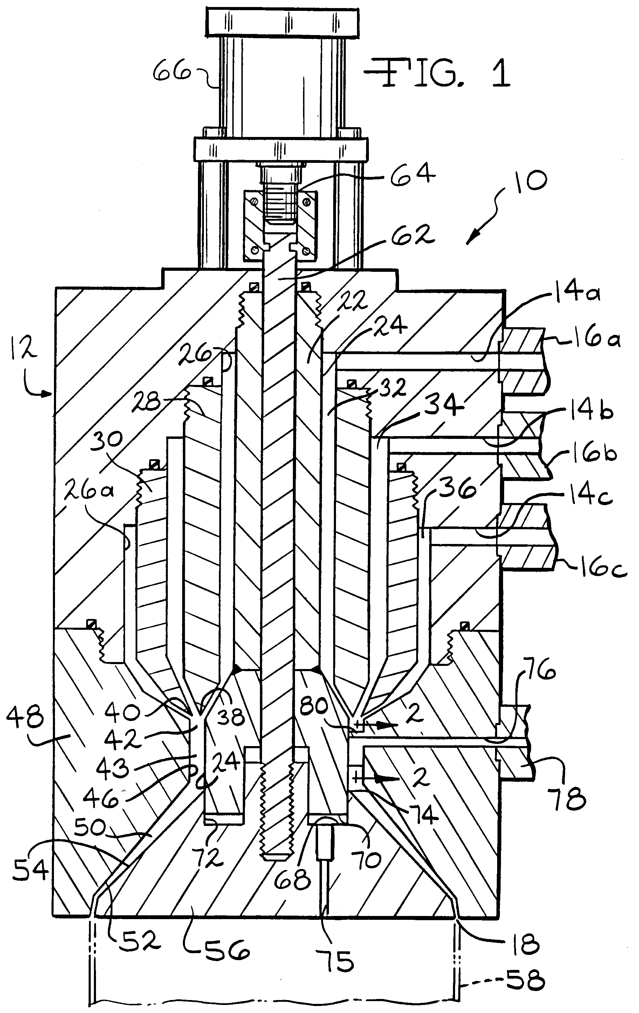

The die head of the present invention having a movable mandrel and configured to reduce the resin volume in the die head tooling and eliminate moving surfaces at the merger of resin layers forming a multiple layer parison is shown in Figure 1 and designated generally at 10. Die head 10 includes a die body 12 having a hollow interior. Die body 12 forms resin inlet passages 14a, 14b and 14c which receive resin from supply tubes 16a, 16b and 16c, respectively. In the die head 10, the resin is shaped to form a tubular body, as will be described in detail below, which is extruded from the die head 10 through an annular outlet orifice 18 at one end of the die head. Although the die head 10 is shown for producing a three layer tubular body, it is to be understood that the invention can be used with a die head producing any number of resin layers including monolayer extrusion. Die head 10 is used for intermittent extrusion by coupling the supply tubes to either reciprocating screw extruders or resin accumulators. The present invention can also be used on intermittent die heads having ring pistons or on continuous extrusion heads.

A mandrel sleeve 22 is mounted within the die body 12 and extends axially therein. The mandrel sleeve has a generally cylindrical exterior surface 24 which is spaced from the interior surface 26 of the die body. Two cylindrical partitions 28 and 30 are also axially disposed in the die body. The inner cylindrical partition 28 is radially spaced outward from the mandrel sleeve to form a tubular resin flow passage 32. The two cylindrical partitions 28 and 30 are spaced from one another forming a second tubular passage 34 while the cylindrical partition 30 is spaced from the inner surface 26a of the die body forming a third tubular passage 36. The tubular passages 32, 34 and 36 are in communication with resin inlet passages 14a, 14b and 14c, respectively, for receiving plastic resins.

The resins flow into the tubular passages forming separate tubular resin bodies which flow axially through each of the tubular passages toward the die head outlet orifice 18. At the terminal ends 38 and 40 of the cylindrical partitions 28 and 30, the three tubular passages merge with one another forming a single tubular resin passage 42. At this point, resins from the individual tubular passages merge together forming a multiple layer resin body which is extruded from the die head forming a multiple layer tubular parison 58. At the point where the resins merge together, it is important that the velocity ratios of the resins be controlled. If the velocity ratios vary appreciably from the optimum range, a distortion in the layer structure can result producing a visual and/or structural defect in the finished product.

The upper portion 43 of the tubular passage 42 is defined by the radially outer cylindrical surface 24 of the sleeve 22 and the radially inner cylindrical surface 46 of die 48. Annular die 48 forms the lower end of the die body 12 and is stationary along with sleeve 22. The lower portion 50 of the tubular passage 42 diverges radially outwardly to the outlet orifice 18. The diverging portion 50 is formed by a frusto-conical radially inner surface 52 of the die 48 and the radially outer surface 54 of frusto-conical mandrel 56. The space between the die surface 52 and the mandrel surface 54 determines the size of outlet orifice 18 and thus the wall thickness of the plastic parison 58 extruded from the die head. In the upper portion 43 of the passage 42, the resin flows in a substantially axial direction. However, in the lower portion, the resin flows in a direction having both axial and radial components. In the die head 10 shown in Figure 1, the lower end of the passage is divergent having a radial component in an outward direction.

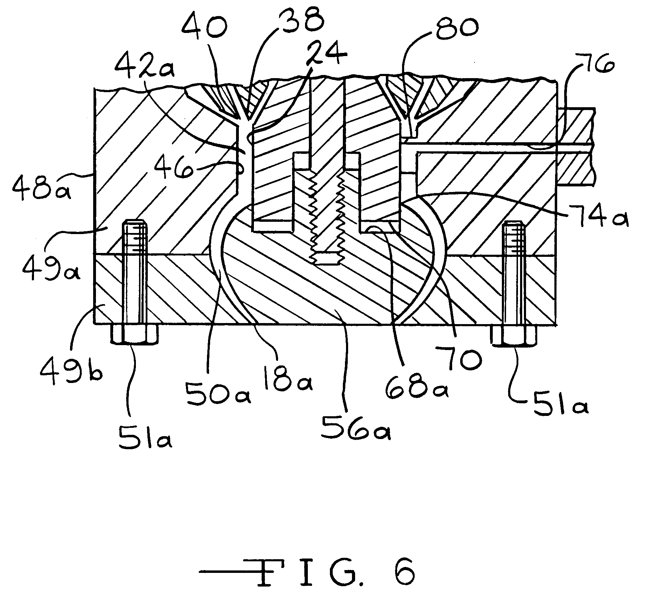

Figure 6 illustrates a modified form of the invention in which the lower portion 50a of the flow passage 42a is converging at the outlet orifice 18a. Mandrel 56a has a diverging upper portion with a recess 68a so that the mandrel can be telescoped over the sleeve end 70. The lower portion of the mandrel surface however, converges to outlet orifice 18a. This results in a lower portion 50a of the passage 42a which first diverges and later converges. The flow channel maintains a radial component of flow throughout most of the passage lower portion. To enable assembly of the die head, the die 48a is made of two pieces, 49a and 49b held together by bolts 51a.

Refering again to Figure 1, the mandrel 56 is mounted in the die head by the pin 62 extending axially through the center of the mandrel sleeve 22. The pin 62 is coupled to rod 64 of actuating cylinder 66 mounted to the top of the die head. The actuating cylinder 66 is used to axially raise and lower the pin and mandrel during the resin extrusion to change the space between the mandrel and the die to vary the wall thickness of the parison. By so doing, the wall thickness can be programmed to take into account the blow-up ratio of the parison during molding to produce a uniform wall thickness in the finished product.

The top of the mandrel 56 includes a circular recessed portion 68 into which the terminal end portion 70 of the sleeve 22 is inserted. The outer periphery of the recess 68 forms an axial sidewall 72 which telescopes over the cylindrical outer surface 24 of the sleeve adjacent the lower end of the sleeve. The sidewall 72 moves relative to the sleeve 24 as the mandrel is moved axially. The circle line of intersection 74 of the mandrel outer surface 54 with the sidewall 24 of the sleeve moves axially relative to the sleeve as the mandrel is moved. An aperture 75 is machined through the mandrel to enable molten resin which may pass between the mandrel and sleeve into the recess, to flow out of the die head.

As a result of the mandrel being telescoped over the bottom end of the sleeve rather than the sleeve being telescoped over the mandrel, the moving mandrel surface is not adjacent the layer merger point as shown in the prior art die head described below.

The die head structure of this invention is contrasted with the prior art die head 110 shown in Figure 5. Die head 110 forms a two layer parison by intermittent extrusion. The inner resin 112 flows into annular accumulator 114 while the outer resin 116 flows into annular accumulator 118. Ring piston 120 surrounding the mandrel rod 122 is moved downward to force resin 112 from accumulator 114. Likewise, ring piston 124 moves downward to force resin 118 from accumulator 118. The two resins merge together at the bottom 126 of resin divider 128. In an effort to reduce the resin volume below the merger point, the merger point has been moved closer to the outlet orifice 130 such that the merger takes place adjacent to the mandrel 132. During parison programming, the cross-sectional area of the resin flow passage at the merger is changed, affecting the resin velocity that can generate inconsistencies in the layer structure.

The die head of this invention avoids distortion of the layer structure by merging the layers together upstream of the moving mandrel so that a steady and consistent resin flow at merger is maintained. The only moving surface in contact with the resin body is the surface 54 of the mandrel. There are no axially moving surfaces adjacent the resin body in the region where two or more resins merge together. Accordingly, there is no change in the velocity of the resin at the point of merger with another resin, thus eliminating a primary cause of layer distortion.

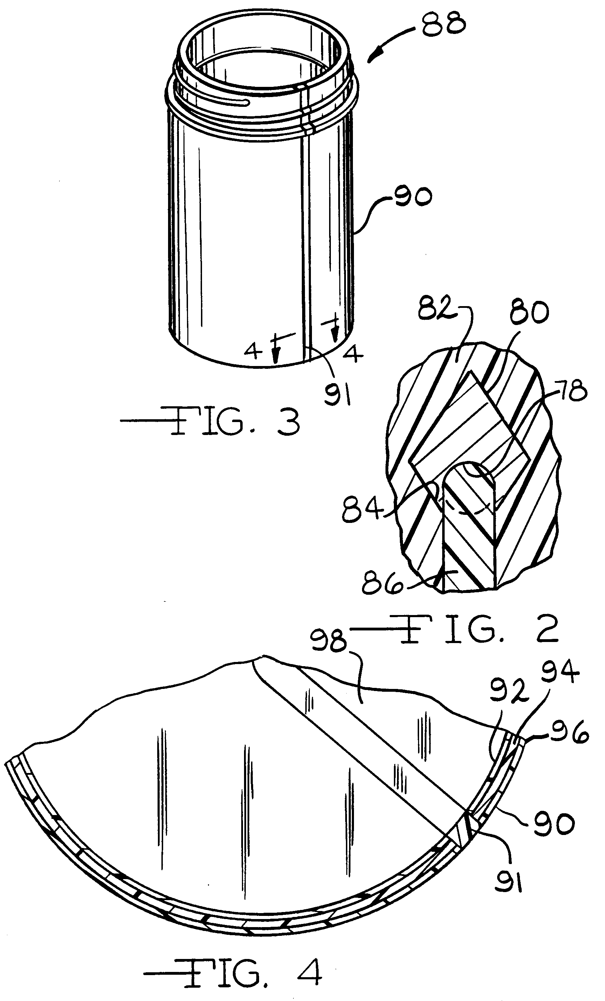

Die head 10 is shown in Figure 1 with an additional resin inlet passage 76 for supplying a translucent resin to form a vertical view stripe in the finished product. Inlet passage 76 is in communication with a resin supply tube 78 which receives a translucent resin from a screw extruder (not shown). The resin inlet passage 76 directs the view stripe resin to a resin flow divider 80 disposed in the upper portion 43 of the tubular resin passage 42. The flow divider is diamond shaped as shown in Figure 2 to divide the flow of resin body 82 as the resin moves around divider 80. The bottom of flow divider 80 is open to discharge the view stripe resin 86 from inlet passage 76 downward into the opening in the divided resin stream 82. The resin 82 flows around the divider and merges with the translucent resin 86 to reform the tubular body. There are no moving walls at the location where the view stripe is formed in the present invention.

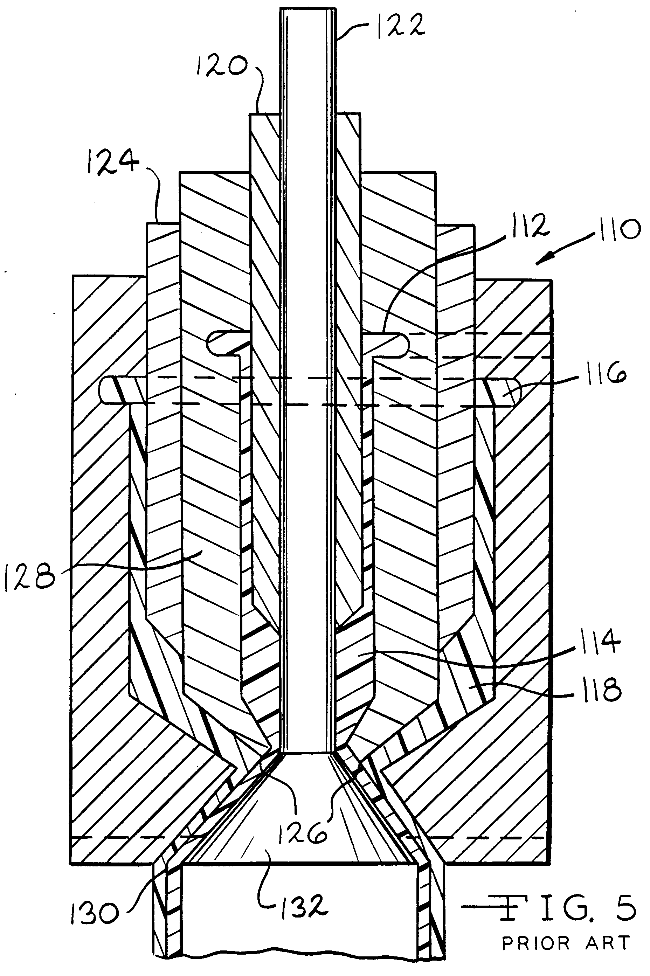

Figure 3 shows a finished container 88 molded from the parison 58. Container 88 includes an upright sidewall 90 which is made primarily of a multiple layer resin body 82 with a vertical stripe 91 of a translucent resin extending radially through the container sidewall 90 to enable a visual determination of the level of the contents in container 88.

Figure 4 is a cross-section through the sidewall 90 showing the view stripe 91 of container 88. The sidewall 90 of the container, formed of resin body 82, is constructed of three resin layers 92, 94 and 96. Resin 92 forming the inner layer is inserted into the die head through the resin inlet passage 14a and flows through the tubular passage 32. The resin 94 forming the center layer is introduced into the die head through inlet passage 14b and tubular passage 34 while the resin 96 forming the outer layer is inserted through inlet passage 14c and tubular passage 36. As seen in Figure 4, the view stripe 91 extends radially completely through the three layer container sidewall 90. The view stripe also continues across the bottom 98 of container 88 toward the center of the container.

In order to insert the view stripe into the tubular resin body, it is necessary that the multi-layer structure be completely formed first. This requires that the view stripe be introduced near the end of the die head past the point of merger of the various resins. The mandrel of the present invention enables the view stripe to be inserted at a location after merger of the layers but also at a location where the inner surface of the resin flow passage is stationary. In so doing, distortion of the view stripe is avoided, enabling the production of a clear view stripe with well defined boundaries between the view stripe and the opaque primary container resins. It is not possible to add a view stripe with the die head of Figure 5 at a point having stationary walls and after merge of the resin layers.

The structure of the mandrel, by providing a recess into which the mandrel sleeve is inserted, enables the resin passage surfaces at the location of resin merger to remain stationary while only the mandrel is moved for programming of the wall thickness. By elimination of moving walls at the point of resin merger, distortion of the layer structure is avoided, resulting in an improved finished product.

While the invention is particularly applicable to intermittent extrusion blow molding, it can be used for continuous extrusion where it is desired to minimize resin residence time in the die head.

The present invention has been described in an illustrative manner and it is to be understood that the terminology that has been used is intended to be in the nature of words of description rather than of limitation. Modifications and variations of the present invention are possible in light of the above teachings. It is to be understood that within the scope of the appended claims, the invention may be practiced otherwise than as specifically described.

**Claims**

1. A die head for producing a multiple layer tubular resin parison, comprising:
   a die body having a longitudinal axis, resin inlet means for receiving a plurality of separated resins and means for forming separated concentric tubular bodies of said resins flowing longitudinally through said die head;

means for merging said separated tubular bodies into a single tubular body of concentric resin layers flowing longitudinally through said die head;

means forming a tubular passage for said multiple layer resin body extending from said merger means to an annular outlet orifice, said passage having an upper portion through which said resin flows substantially in an axial direction and said passage having a lower portion through which said resin flows in a direction having both axial and radial components.

2. The die head of Claim 1 wherein said means forming a tubular passage comprises an axially extending sleeve member, a mandrel extending from one end of said sleeve member, a portion of said mandrel being telescoped over said sleeve member end, and an annular die surrounding said sleeve member and mandrel and spaced therefrom forming said passage therebetween, the clearance between said sleeve member and die forming the upper portion of the passage and the clearance between said mandrel and die forming the lower portion of the passage.

3. The die head of Claim 2 further comprising means for mounting said mandrel in said die head for axial movement of said mandrel relative to said sleeve member to vary the space between said mandrel and said die.

4. The die head of Claim 1 further comprising means for inserting a longitudinal stripe of a translucent resin in said parison which extends radially through the multiple layer parison structure.

5. The die head of Claim 4 wherein said resin inserting means includes means disposed in said upper portion of said passage for dividing said multiple layer body and for discharging said translucent resin downwardly into the divided multiple layer resin body.

6. The die head of Claim 1 wherein the radial component of resin flow in the lower portion of the passage is radially outward whereby said lower portion of the passage is diverging.

7. The die head of Claim 1 wherein the radial component of resin flow in the lower portion of the passage is first radially outward forming a diverging passage and later radially inward forming a converging passage terminating at said outlet orifice

**Amended claims in accordance with Rule 86-(2) EPC.**

1. A die head for producing a multiple layer tubular resin parison, comprising:

a die body (12) having a longitudinal axis, resin inlets (14a,14b,14c) for receiving a plurality of separated resins and means (32,34,36) for forming separated concentric tubular bodies of said resins flowing longitudinally through said die body;

means (38,40) for merging said separated tubular bodies into a single tubular body of concentric resin layers flowing longitudinally through said die head, said means merging said resin bodies into said single body at a single longitudinal location within said die head;

means forming a tubular passage (42,50) for said multiple layer resin body extending from said merger means to an annular outlet orifice (18), said passage having two separate portions, a lower portion (50) through which said resin flows in a direction having both axial and radial components, and an upper portion (42) through which said resin flows substantially in an axial direction to the upper end of said lower portion (50), the lower portion (50) of the passage being defined between a stationary annular die (48) and a mandrel (56) axially movable within said die, characterised in that said upper portion (42) is formed between an axially extending stationary sleeve (22) member and the die (48), the mandrel (56) extending from the lower end of said sleeve member (22) with a portion of said mandrel (56) being telescoped over said sleeve member end.

2. A die head according to claim 1, further comprising means (76,78) for inserting a longitudinal stripe (86) of a translucent resin in said parison which extends radially through the multiple layer parison structure.

3. A die head according to claim 2, wherein said resin inserting means includes means (80) disposed in said upper portion (42) of said passage for dividing said multiple layer body (82) and for discharging said translucent resin (86) downwardly into the divided multiple layer resin body.

4. A die head according to claim 1, 2 or 3, wherein the radial component of resin flow in the lower portion (50) of the passage is radially outward whereby said lower portion of the passage is diverging.

5.   A die head according to claim 1, 2 or 3, wherein the radial component of resin flow in the lower portion (50a) of the passage is first radially outward forming a diverging passage and later radially inward forming a converging passage terminating at said outlet orifice (18a).

FIG. 1

EP 0 491 093 A1

FIG. 3

FIG. 2

FIG. 4

9

FIG. 5
PRIOR ART

FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-360 114 (KRUPP KAUTEX MASCHINENBAU GMBH) | 1-3,6 | B29C47/06 |
| Y | * figures 1,2,6-8 * | 4,5,7 | B29C47/22 |
| | --- | | B29C47/04 |
| Y | EP-A-333 956 (HOOVER UNIVERSAL,INC.) | 4,5 | |
| | * figures * | | |
| | --- | | |
| Y | EP-A-265 420 (CINCINNATI MILACRON INC.) | 7 | |
| | * figures * | | |
| | --- | | |
| X | EP-A-274 095 (BEKUM MASCHINENFABRIK GMBH) | 1-3 | |
| A | * figures * | 7 | |
| | --- | | |
| A | EP-A-249 866 (BEKUM MASCHINENFABRIK GMBH) | 1-3,6 | |
| | * figures * | | |
| | --- | | |
| A | US-A-4 297 092 (J. GORON) | 1-3,6 | |
| | * figures * | | |
| | --- | | |
| A | DE-A-1 900 532 (BADISCHE ANILIN & SODA-FABRIK A.G.) | 1,7 | |
| | * figure * | | |
| | ----- | | |

| | TECHNICAL FIELDS SEARCHED (Int. Cl.5 ) |
|---|---|
| | B29C |

The present search report has been drawn up for all claims

| Place of search | Date of completion of the search | Examiner |
|---|---|---|
| THE HAGUE | 08 AUGUST 1991 | BELIBEL C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................
& : member of the same patent family, corresponding document

EPO FORM 1503 03.82 (P0401)